# EUROPEAN PATENT SPECIFICATION

(11) **EP 3 437 446 B1**
(45) Date of publication and mention of the grant of the patent: **08.04.2020**
(21) Application number: 17184708.0
(22) Date of filing: 03.08.2017
(51) Int. Cl.: A01B 17/00

(54) **REMOTE SKIMMER ADJUSTMENT FOR A MOULDERBOARD PLOUGH**
ENTFERNTE SKIMMEREINSTELLUNG FÜR EINEN STREICHBLECHPFLUG
RÉGLAGE D'ÉCUMEUR À DISTANCE DESTINÉ À UNE CHARRUE VERSOIR

(43) Date of publication of application: 06.02.2019
(73) Proprietor: Kverneland Group Operations Norway AS, 4353 Klepp Stasjon (NO)
(72) Inventor: Bjørås, Emil, 4353 Klepp St. (NO)
(74) Representative: Håmsø Patentbyrå AS

(56) References cited:
- EP-A1- 3 057 393
- DE-B4- 4 339 254

## Description

The invention is related to a reversible mouldboard plough, wherein a plough beam is provided with a pair of plough bodies, a skimmer arrangement being connected to the plough beam providing a first skimmer and a second skimmer proximate and in front of the respective plough bodies, wherein each skimmer is attached to a skimmer shank which is arranged displaceable in a longitudinal direction of the skimmer shank, and wherein the first skimmer and the second skimmer are interconnected with a synchronization mechanism arranged to provide equal displacement of the skimmers relative to the respective plough bodies, the first skimmer and the second skimmer further being interconnected with a linear actuator arranged for displacing the skimmers in the longitudinal direction of the skimmer shanks, and wherein a control unit is arranged for remote control of the displacement of the first and second skimmers. The invention is also related to a method of setting the working depth of skimmers of a reversible multi-furrow mouldboard plough.

It is known to use a so-called plough skimmer in front of every plough body in a plough for soil preparation. The purpose of the plough skimmer is primarily to cut off a border portion of the edge of each furrow slice before it is turned over so that the ploughing gets a more even surface and the furrow slices are closed. Thereby there will be, among other things, reduced possibilities for plants to grow up from the downward-facing slice surface, which, in meadow-ploughing, is densely studded with old plant material. There is a need to be able to adjust the depth of each plough skimmer in order to adapt the vertical position of the plough bodies to the ploughing depth of the plough.

On a reversible plough, two opposite plough skimmers are attached to the same beam, i.e. the piece of frame onto which two opposing plough bodies are attached.

From EP3057393 a device for the depth adjustment of pair of plough skimmers on a reversible plough is known, in which a mounting bracket for a pair of plough skimmers is provided with means for fixing the pair of plough skimmers in a preferred position on the plough beam. An actuator is attached to the mounting bracket and is connected to an end portion of shanks extending from the plough skimmer into a guide arrangement on the mounting bracket. In one embodiment, the actuator is a link-arm arrangement with a pivot arm pivotally supported in the mounting bracket around the centre of the pivot arm, and with upper end portions of the shanks of the plough skimmers connected via link arms attached by pivot joints. The pivoting of the pivot arm moves the end portions of the link arms and pulls or pushes the shanks of the plough skimmer up or down in the mounting bracket. In another embodiment, the actuator is formed as a link-arm arrangement including a central adjustment bracket displaceable substantially transversely to the longitudinal direction of the shank, along a horizontal portion of the plough beam. The displacement of the adjustment bracket is brought about with a threaded rod that is rotated manually by means of a spanner engaging with an end portion of the threaded rod, or by means of a motor. The displacement of the adjustment bracket moves the end portions of the link arms and pulls or pushes the shanks of the plough skimmers up or down in the mounting bracket.

From DE4339254 B4 is known a system for simultaneous adjustment of a working angle, i.e. the pivoting of the all skimmers about vertical pivoting axes.

The invention has for its object to remedy or to reduce at least one of the drawbacks of the prior art, or at least provide a useful alternative to prior art.

The object is achieved through features, which are specified in the description below and in the claims that follow.

A remote-controlled depth adjustment of skimmers of a reversible mouldboard plough is provided, wherein a pair of opposing skimmers is interconnected by a linear, remote controlled actuator arranged for displacing the skimmers in the longitudinal direction of shanks on which the skimmers are attached. The shanks are arranged on a plough beam displaceable in opposing directions. The skimmer shanks are interconnected with a synchronizing mechanism arranged for performing equal, though opposite displacement of the two skimmer shanks when the actuator is operated for increasing or decreasing the working depth of the skimmers.

The actuator is preferably electrically powered.

The actuator is connected to a control unit arranged for remote adjustment of the skimmers. On a multi-furrow plough, all pair of skimmers are preferably simultaneously adjusted by means of the control unit. Advantageously, on a multi-furrow plough the working depth of one pair of skimmers can be set independently of the working depth of other pair of skimmers.

The control unit is arranged for automatic adjustment of the working depth of the skimmers correlated with the setting of the working depth of the plough bodies. The working depth of the plough bodies is normally controlled by the setting of one or more depth wheels, preferably by means of one or more hydraulic cylinders arranged at the depth wheel.

The pair of skimmer shanks is preferably attached to a common skimmer bracket attached to a horizontal portion of the plough beam displaceable along the beam to allow the skimmers to be horizontally displaced in proportion to a pair of plough bodies to which the skimmers are related.

The invention is defined by the independent patent claims. The dependent claims define advantageous embodiments of the invention.

In a first aspect the invention relates more particularly to a reversible mouldboard plough, wherein a plough beam is provided with a pair of plough bodies, a skimmer arrangement being connected to the plough beam providing a first skimmer and a second skimmer proximate and in front of the respective plough bodies, wherein each skimmer is attached to a skimmer shank which is arranged displaceable in a longitudinal direction of the skimmer shank, and wherein the first skimmer and the second skimmer are interconnected with a synchronization mechanism arranged to provide equal displacement of the skimmers relative to the respective plough bodies, the first skimmer and the second skimmer are further interconnected with a linear actuator arranged for displacing the skimmers in the longitudinal direction of the skimmer shanks, and wherein a control unit is arranged for remote control of the displacement of the first and second skimmers, characterized in that a depth wheel is provided with a depth adjustment actuator, and the control unit is arranged to allow a change of the vertical position of the skimmers correlated with a change of a vertical position of the depth wheel.

The linear actuator may be electrically powered.

The control unit is arranged for simultaneous remote control of the displacement of the first and second skimmers of multiple skimmer arrangements.

The control unit may be arranged for individual remote control of the displacement of the skimmers of each of the skimmer arrangements of a multi-furrow reversible mouldboard plough.

The depth adjustment actuator of the depth wheel is controlled by the control unit, and the control unit may be arranged to allow a change of the vertical position of the depth wheel.

The linear actuator may be connected to mid-portions of the shanks of the skimmer arrangement.

The skimmer arrangement may be connected to a horizontal portion of the plough beam with a bracket displaceable along said plough beam portion.

The synchronization mechanism may be formed as a link-arm arrangement including a pivot arm pivotal around a centre axis and connected to upper second end-portions via link arms.

A centre portion of the pivot arm may be provided with an engagement portion arranged for connecting a manually operated skimmer depth-adjusting tool to the pivot arm.

In a second aspect the invention relates more particularly to a method of setting the working depth of skimmers of a reversible multi-furrow mouldboard plough,
wherein a plough beam is provided with a pair of plough bodies, a skimmer arrangement being connected to the plough beam providing a first skimmer and a second skimmer proximate and in front of the respective plough bodies,
wherein each skimmer is attached to a skimmer shank which is arranged displaceable in a longitudinal direction of the skimmer shank,
wherein the first skimmer and the second skimmer are interconnected with a synchronization mechanism arranged to provide equal displacement of the skimmers relative to the respective plough bodies,
wherein the first skimmer and the second skimmer are further interconnected with a linear actuator arranged for displacing the skimmers in the longitudinal direction of the skimmer shanks,
wherein a control unit is arranged for remote control of the displacement of the first and second skimmers,
wherein the reversible mouldboard plough further comprises a depth control device provided with a depth adjustment actuator controlled by the control unit,
a depth wheel is provided with a depth adjustment actuator,and
wherein the control unit is arranged to allow a change of a vertical position of the depth wheel providing a correlated change of the vertical position of the skimmers correlated with a change of the vertical position of the depth wheel,
characterized in that the method comprises the steps of:
   a) setting the working depth of the plough by changing the vertical position of the depth wheel;
   b) setting the working depth of the first and second skimmers of the skimmer arrangements;
   c) setting the control unit to allow change of the vertical position of the depth wheel to provide a correlated change of the vertical position of the skimmers; and
   d) operating the plough including changing the working depth of the plough, thereby simultaneously displacing the first and second skimmers correlatively.

The method may comprise the further step of:
b1) setting the working depth of the first and second skimmers of every one of the skimmer arrangements individually.

Alternatively, the method may comprise the further step of:
b1) setting the working depth of the first and second skimmers of every one of the skimmer arrangements collectively.

In the following is described an example of a preferred embodiment illustrated in the accompanying drawings, wherein:
- Fig. 1: shows in a perspective view a plough with a skimmer arrangement according to the invention;
- Fig. 2: shows a partly cut side view section of the plough with a skimmer arrangement, the skimmers being set at an intermediate working position relative to the respective plough bodies;
- Fig. 3: shows in larger scale a side view of the skimmer arrangement connected to a plough beam, the skimmers being set at their largest working depth.

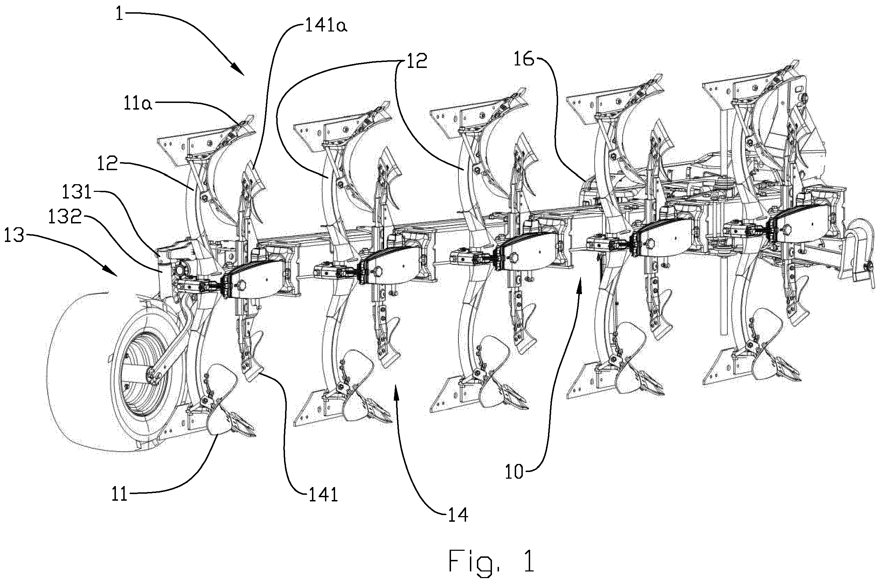

In figure 1, the reference numeral 1 indicates a plough; more specifically a reversible, multi-furrow mouldboard plough provided with several plough beams 12 connected to a main frame 10, each plough beam 12 carrying two opposing plough bodies 11, 11a. A ploughing depth control device, here shown as a depth wheel 13, comprises a remote controlled depth adjustment actuator 131 and is attached to a rear portion of the main frame 10. The depth wheel 13 is provided with a position indicator 132. The depth adjustment actuator 131 and the depth wheel position indicator 132 are connected to a control unit 16 provided at a front portion of the main frame 10 further connected to remote control panel (not shown) arranged close to a driver, for example in a tractor's cab (not shown). A skimmer arrangement 14 is attached to each of the plough beams 12, providing a first skimmer 141 and a second skimmer 141a arranged in front of the respective plough body 11, 11a.

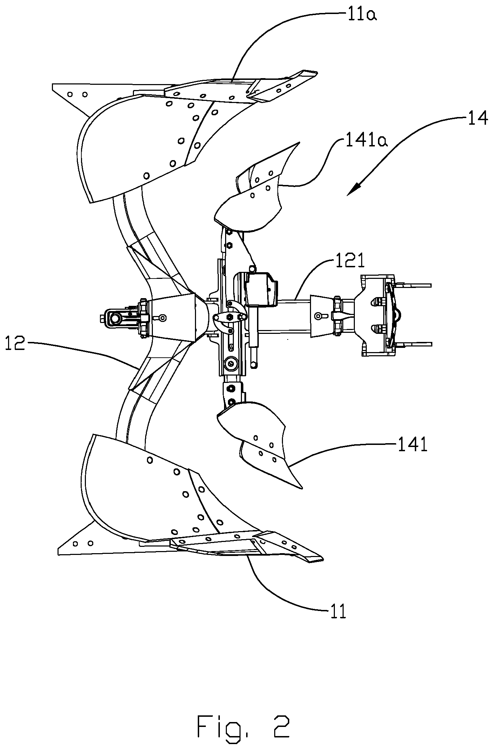

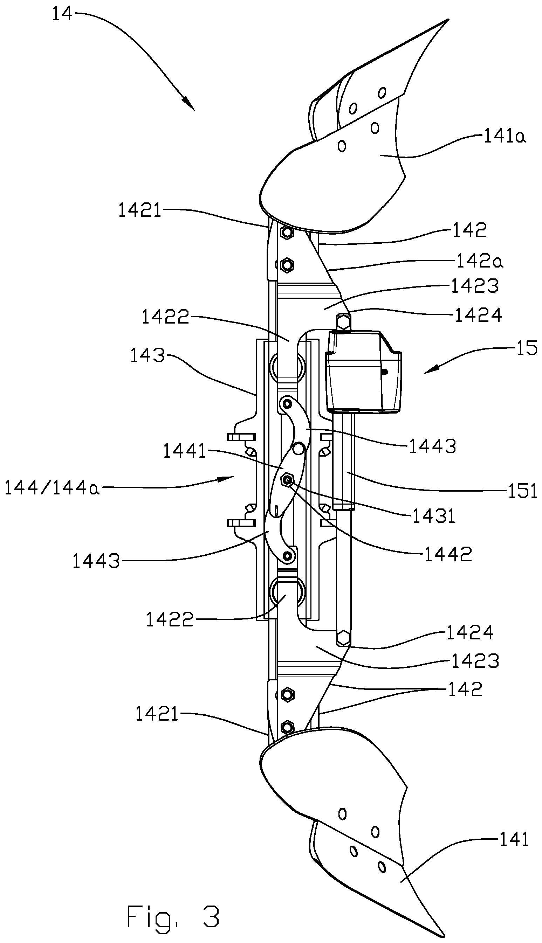

It is now referred to figures 2 and 3. The skimmer arrangement 14 is provided with a skimmer bracket 143, which is attached to a horizontal portion 121 of the plough beam 12 (shown in figure 2 only). The skimmer bracket 143 is displaceable along the plough beam portion 121. The skimmers 141, 141a are attached to first end portions 1421 of respective skimmer shanks 142 which are extending in opposite directions from the skimmer bracket 143. Second end portions 1422 of the skimmer shanks 142 are in engagement with the skimmer bracket 143 slidable in the longitudinal direction of the skimmer shanks 142. A skimmer shank plate 142a is bolted onto each skimmer shank 142, extending outside the skimmer bracket 143. The two opposing skimmer shanks 142 are interconnected by means of a synchronization mechanism 144, in this embodiment shown as a link-arm arrangement 144a. The link-arm arrangement 144a comprises a pivot arm 1441 pivotal about a joint pin 1431 extending from the skimmer bracket 143. Co-axial to the joint pin 1431 an engagement portion 1442 is extending from a mid-portion of the pivot arm 1441 and arranged for engagement with a tool (not shown), e.g. a spanner, for manual operation of the link-arm arrangement 144a. Each end portion of the pivot arm 1441 is connected to a link arm 1443, each of which being connected to shank plate end-portions 1422 of the respective skimmer shank plates 142a. Thus, longitudinal displacement of one of the skimmer shanks 142 will cause the other skimmer shank 142 displace correspondingly in the opposite direction. For a person skilled in the art it is obvious that various forms of synchronization mechanisms are suitable, among others a gear system meshing with the skimmer shanks.

A remote controlled actuator 15 is interconnecting the pair of skimmer shanks 142, in this embodiment shown as a linear, electric operated actuator 15 connected to mid-portions 1423 of the skimmer shank plates 142a, more precisely to lugs 1424 provided on the shank plates 142a. The actuator 15 is connected to a control unit 16 (see fig. 1) and is provided with position monitoring means 151 to allow feedback of the level of extension of the actuator 15 to the control unit 16.

The control unit 16 is arranged for individual and collective control of the actuator 15 of each skimmer arrangement 14. Thus, a pair of skimmers 141, 141a can be set differently from the setting of the remaining pair of skimmers 141, 141a.

The control unit is also arranged for controlling the vertical position of the depth wheel by remote operation of the depth adjustment actuator 131 and processing of input from the position indicator 132 of the depth wheel 13.

In order to allow the vertical position of the skimmers 141, 141a to be automatically changed when the working depth of the plough is changed by changing the vertical position of the depth wheel 13, the control unit is arranged to selectively be set to allow skimmer depth to be automatically correlated with the change of ploughing depth setting.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A reversible mouldboard plough (1), wherein a plough beam (12) is provided with a pair of plough bodies (11), a skimmer arrangement (14) being connected to the plough beam (12) providing a first skimmer (141) and a second skimmer (141a) proximate and in front of the respective plough bodies (11), wherein each skimmer (141, 141a) is attached to a skimmer shank (142) which is arranged displaceable in a longitudinal direction of the skimmer shank (142), and wherein the first skimmer (141) and the second skimmer (141a) are interconnected with a synchronization mechanism (144) arranged to provide equal displacement of the skimmers (141, 141a) relative to the respective plough bodies (11), the first skimmer (141) and the second skimmer (141a) are further interconnected with a linear actuator (15) arranged for displacing the skimmers (141, 141a) in the longitudinal direction of the skimmer shanks (142), and wherein a control unit (16) is arranged for remote control of the displacement of the first and second skimmers (141, 141a), **characterised in that** a depth wheel (13) is provided with a depth adjustment actuator (131), and the control unit (16) is arranged to allow a change of the vertical position of the skimmers (141, 141a) correlated with a change of a vertical position of the depth wheel (13).

2. The reversible mouldboard plough (1) according to claim 1, wherein the linear actuator (15) is electrically powered.

3. The reversible mouldboard plough (1) according to claim 1, wherein the control unit (16) is arranged for simultaneous remote control of the displacement of the first and second skimmers (141, 141a) of multiple skimmer arrangements (14).

4. The reversible mouldboard plough (1) according to claim 3, wherein the control unit (16) is arranged for individual remote control of the displacement of the skimmers (141, 141a) of each of the skimmer arrangements (14) of a multi-furrow reversible mouldboard plough (1).

5. The reversible mouldboard plough (1) according to claim 1, wherein the depth adjustment actuator (131) of the depth wheel (13) is controlled by the control unit (16), and wherein the control unit (16) is arranged to allow a change of the vertical position of the depth wheel (13).

6. The reversible mouldboard plough (1) according to claim 1, wherein the linear actuator (15) is connected to mid-portions (1423) of the shanks (142) of the skimmer arrangement (14).

7. The reversible mouldboard plough (1) according to claim 1, wherein the skimmer arrangement (14) is connected to a horizontal portion (121) of the plough beam (12) with a bracket (143) displaceable along said plough beam portion (121).

8. The reversible mouldboard plough (1) according to claim 1, wherein the synchronization mechanism (144) is formed as a link-arm arrangement (144a) including a pivot arm (1441) pivotal around a centre axis and connected to upper second end-portions (1422) via link arms (1443).

9. The reversible mouldboard plough (1) according to claim 8, wherein a centre portion of the pivot arm is provided with an engagement portion (1442) arranged for connecting a manually operated skimmer depth adjusting tool to the pivot arm (1441).

10. Method of setting the working depth of skimmers (141, 141a) of a reversible multi-furrow mouldboard plough (1), wherein
a plough beam (12) is provided with a pair of plough bodies (11), a skimmer arrangement (14) being connected to the plough beam (12) providing a first skimmer (141) and a second skimmer (141a) proximate and in front of the respective plough bodies (11),
each skimmer (141, 141a) is attached to a skimmer shank (142) which is arranged displaceable in a longitudinal direction of the skimmer shank (142),
the first skimmer (141) and the second skimmer (141a) are interconnected with a synchronization mechanism (144) arranged to provide equal displacement of the skimmers (141, 141a) relative to the respective plough bodies (11),
the first skimmer (141) and the second skimmer (141a) are further interconnected with a linear actuator (15) arranged for displacing the skimmers (141, 141a) in the longitudinal direction of the skimmer shanks (142),
a control unit (16) is arranged for remote control of the displacement of the first and second skimmers (141, 141a),
a depth wheel (13) is provided with a depth adjustment actuator (131),
and the control unit (16) is arranged to allow a change of a vertical position of the skimmers (141, 141a) correlated with a change of the vertical position of the depth wheel (13), **characterised in that** the method comprises the steps of:
a) setting the working depth of the plough (1) by changing the vertical position of the depth wheel (13);
b) setting the working depth of the first and second skimmers (141, 141a) of the skimmer arrangements (14);
c) setting the control unit (16) to allow change of the vertical position of the depth wheel (13) to provide a correlated change of the vertical position of the skimmers (141, 141a);
d) operating the plough (1) including changing the working depth of the plough (1), thereby simultaneously displacing the first and second skimmers (141, 141a) correlatively.

11. Method according to claim 10, wherein the method comprises the further step of:
b1) setting the working depth of the first and second skimmers (141, 141a) of every one of the skimmer arrangements (14) individually.

12. Method according to claim 10, wherein the method comprises the further step of:
b1) setting the working depth of the first and second skimmers (141, 141a) of every one of the skimmer arrangements (14) collectively.

## Patentansprüche

1. Einen Schar-Drehpflug (1), wobei ein Pflug-Rahmenrohr (12) bereitgestellt wird, mit einem Paar Pflugkörper (11), einer Abstreifervorrichtung (14), welche mit dem Pflug-Rahmenrohr (12) verbunden ist und einen ersten Abstreifer (141) und einen zweiten Abstreifer (141a) neben und vor den entsprechenden Pflugkörpern (11) bereitstellt, wobei jeder Abstreifer (141, 141a) an einem Abstreifer-Schaft (142) befestigt ist, welcher auf verschiebbare Weise in einer Längsrichtung des Abstreifer-Schafts (142) angeordnet ist, und wobei der erste Abstreifer (141) und der zweite Abstreifer (141a) mittels eines Synchronisationsmechanismus (144) miteinander verbunden sind, um gleiche Verschiebung der Abstreifer (141, 141a) in Bezug auf die entsprechenden Pflugkörper (11) zu gewährleisten, wobei der erste Abstreifer (141) und der zweite Abstreifer (141a) ferner mit einem Linearaktor (15) verbunden sind, welcher angeordnet ist, um die Abstreifer (141, 141a) in der Längsrichtung der Abstreifer-Schäfte (142) zu verschieben, und wobei eine Steuereinheit (16) angeordnet ist zur Femsteuerung der Verschiebung des ersten und zweiten Abstreifers (141, 141a), **dadurch gekennzeichnet, dass** ein Stützrad (13) mit einem Tiefeneinstellungs-Antrieb (131) bereitgestellt ist, und dass die Steuereinheit (16) ausgestattet ist, um einen Wechsel der Vertikalposition der Abstreifer (141, 141a) zu ermöglichen, in Korrelation mit einem Wechsel einer Vertikalposition des Stützrads (13).

2. Schar-Drehpflug (1) gemäss Anspruch 1, wobei der Linearaktor (15) elektrisch angetrieben ist.

3. Schar-Drehpflug (1) gemäss Anspruch 1, wobei die Steuereinheit (16) ausgestattet ist zur simultanen Femsteuerung der Verschiebung des ersten und zweiten Abstreifers (141,141a) von Mehrfach-Abstreifervorrichtungen (14).

4. Schar-Drehpflug (1) gemäss Anspruch 3, wobei die Steuereinheit (16) ausgestattet ist zur individuellen Fernsteuerung der Verschiebung der Abstreifer (141, 141a) von jeder der Abstreifervorrrichtungen (14) eines Schar-Drehpflugs mit Mehrfachfurchen.

5. Schar-Drehpflug (1) gemäss Anspruch 1, wobei der Tiefeneinstellungs-Antrieb (131) des Stützrads (13) durch die Steuereinheit (16) gesteuert wird, und wobei die Steuereinheit (16) ausgestattet ist, um einen Wechsel der Vertikalposition des Stützrads (13) zu ermöglichen.

6. Schar-Drehpflug (1) gemäss Anspruch 1, wobei der Linearaktor (15) mit Mittelabschnitten (1423) der Schäfte (142) der Abstreifervorrichtung (14) verbunden ist.

7. Schar-Drehpflug (1) gemäss Anspruch 1, wobei die Abstreifervorrichtung (14) mit einem horizontalen Abschnitt (121) des Pflug-Rahmenrohrs (12) verbunden ist mittels einer Klammer (143), welche entlang des besagten Abschnittes (121) des Pflug-Rahmenrohrs (12) verschiebbar ist.

8. Schar-Drehpflug (1) gemäss Anspruch 1, wobei der Synchronisationsmechanismus (144) gebildet ist als eine Verbindungsarm-Vorrichtung (144a) aufweisend einen Schwenkarm (1441), welcher um eine Mittelachse schwenkbar ist und über Verbindungsarme (1443) mit oberen zweiten Endabschnitten (1422) verbunden ist.

9. Schar-Drehpflug (1) gemäss Anspruch 8, wobei ein Mittelabschnitt des Schwenkarms ausgestattet ist mit einem Eingriffsabschnitt (1442), welcher ausgestattet ist zur Verbindung eines manuell betriebenen Abstreifer-Tiefeneinstellungs-Werkzeugs mit dem Schwenkarm (1441).

10. Verfahren zur Einstellung der Arbeitstiefe von Abstreifem (141, 141a) eines Schar-Drehpflugs (1) mit Mehrfachfurchen, wobei
ein Pflug-Rahmenrohr (12) mit einem Paar von Pflugkörpern (11) bereitgestellt wird, wobei eine Abstreifervorrichtung (14) mit dem Pflug-Rahmenrohr (12) verbunden ist, welches einen ersten Abstreifer (141) und einen zweiten Abstreifer (141a) neben und vor den entsprechenden Pflugkörpern (11) bereitstellt,
wobei jeder Abstreifer (141, 141a) mit einem Abstreifer-Schaft (142) verbunden ist, welcher auf verschiebbare Weise in einer Längsrichtung des Abstreifer-Schafts (142) angeordnet ist,
wobei der erste Abstreifer (141) und der zweite Abstreifer (141a) über einen Synchronisationsmechanismus (144) miteinander verbunden sind, welcher ausgestattet ist, um gleiche Verschiebung der Abstreifer (141, 141a) in Bezug auf die entsprechenden Pflugkörper (11) zu ermöglichen,
wobei der erste Abstreifer (141) und der zweite Abstreifer (141a) ferner mit einem Linearaktor (15) verbunden sind, welcher angeordnet ist, um die Abstreifer (141, 141a) in der Längsrichtung der Abstreifer-Schäfte (142) zu verschieben,
wobei eine Steuereinheit (16) angeordnet ist zur Fernsteuerung der Verschiebung des ersten und zweiten Abstreifers (141, 141a),
wobei ein Stützrad (13) mit einem Tiefeneinstellungs-Antrieb (131) bereitgestellt ist,
und wobei die Steuereinheit (16) ausgestattet ist, um einen Wechsel einer Vertikalposition der Abstreifer (141, 141a) bereitzustellen, in Korrelation mit einem Wechsel der Vertikalposition des Stützrads (13),
**dadurch gekennzeichnet, dass** das Verfahren die folgenden Schritte aufweist:
a) Einstellen der Arbeitstiefe des Pflugs (1) durch Wechseln der Vertikalposition des Stützrads (13);
b) Einstellen der Arbeitstiefe des ersten und zweiten Abstreifers (141, 141a) der Abstreifervorrichtungen (14);
c) Einstellen der Steuereinheit (16), um einen Wechsel der Vertikalposition des Stützrads (13) zu ermöglichen, um einen korrelierten Wechsel der Vertikalposition des Abstreifers (141, 141a) bereitzustellen;
d) Bedienen des Pflugs (1), einschliesslich Wechseln der Arbeitstiefe des Pflugs (1), wodurch der erste und der zweite Abstreifer (141, 141a) gleichzeitig in korrelierender Weise verschoben werden.

11. Verfahren gemäss Anspruch 10, wobei das Verfahren ferner den folgenden Schritt aufweist:
b1) individuelles Einstellen der Arbeitstiefe des ersten und zweiten Abstreifers (141, 141a) von jeder einzelnen der Abstreifervorrichtungen (14).

12. Verfahren gemäss Anspruch 10, wobei das Verfahren ferner den folgenden Schritt aufweist:
b1) kollektives Einstellen der Arbeitstiefe des ersten und zweiten Abstreifers (141, 141a) von jeder einzelnen der Abstreifervorrichtungen (14).

## Revendications

1. Une charrue à versoir réversible (1), dans laquelle un age de charrue (12) est pourvu d'une paire de corps de charrue (11), un agencement de rasettes (14) étant relié à l'age de charrue (12) fournissant une première rasette (141) et une seconde rasette (141a) à proximité et devant les corps de charrue respectifs (11), dans laquelle chaque rasette (141, 141a) est fixée à une tige de rasette (142) qui est disposée de façon à pouvoir se déplacer dans une direction longitudinale de la tige de rasette (142), et dans laquelle la première rasette (141) et la seconde rasette (141a) sont interconnectées avec un mécanisme de synchronisation (144) disposé pour permettre un déplacement égal des rasettes (141, 141a) par rapport aux corps de charrue respectifs (11), la première rasette (141) et la seconde rasette (141a) étant en outre interconnectées avec un actionneur linéaire (15) disposé pour déplacer les rasettes (141, 141a) dans la direction longitudinale des tiges de rasette (142), et dans laquelle une unité de commande (16) est disposée pour une commande à distance du déplacement de la première et seconde rasette (141, 141a), **caractérisée en ce que** une roue de profondeur (13) est pourvue d'un actionneur de réglage de profondeur (131), et l'unité de commande (16) est agencée pour permettre un changement d'une position verticale des rasettes (141, 141a) corrélé à un changement de position verticale de la roue de profondeur (13).

2. La charrue à versoir réversible (1) selon la revendication 1, dans laquelle l'actionneur linéaire (15) est alimenté électriquement.

3. La charrue à versoir réversible (1) selon la revendication 1, dans laquelle l'unité de commande (16) est disposée pour une commande à distance simultanée du déplacement de la première et seconde rasette (141, 141a) d'agencements de rasette (14) multiples.

4. La charrue à versoir réversible (1) selon la revendication 3, dans laquelle l'unité de commande (16) est disposée pour une commande à distance individuelle du déplacement des rasettes (141, 141a) de chacun des agencements de rasette (14) d'une charrue à versoir réversible (1) multi-sillon.

5. La charrue à versoir réversible (1) selon la revendication 1, dans laquelle l'actionneur de réglage de profondeur (131) de la roue de profondeur (13) est commandé par l'unité de commande (16), et dans laquelle l'unité de commande (16) est disposée pour permettre un changement de la position verticale de la roue de profondeur (13).

6. La charrue à versoir réversible (1) selon la revendication 1, dans laquelle l'actionneur linéaire (15) est relié à des parties médianes (1423) des tiges (142) de l'agencement de rasettes (14).

7. La charrue à versoir réversible (1) selon la revendication 1, dans laquelle l'agencement de rasettes (14) est relié à une partie horizontale de l'age de charrue (12) avec un support (143) déplaçable le long de ladite partie d'age de charrue (121).

8. La charrue à versoir réversible (1) selon la revendication 1, dans laquelle le mécanisme de synchronisation (144) est formé sous la forme d'un agencement de bras - liaison (144a) comprenant un bras pivotant (1441) pivotant autour d'un axe central et relié à des secondes parties d'extrémité supérieures (1422) par l'intermédiaire de bras de liaison (1443).

9. La charrue à versoir réversible (1) selon la revendication 8, dans laquelle une partie centrale du bras pivotant est pourvue d'une partie de mise en prise (1442) disposée pour relier un outil de réglage de profondeur de rasette actionné manuellement au bras pivotant (1441).

10. Un procédé de réglage de la profondeur de travail de rasettes (141, 141a) d'une charrue à versoir réversible (1) multi-sillon, dans lequel:
un age de charrue (12) est pourvu d'une paire de corps de charrue (11), un agencement de rasettes (14) étant relié à l'age de charrue (12) fournissant une première rasette (141) et une seconde rasette (141a) à proximité et devant les corps de charrue respectifs (11),
chaque rasette (141, 141a) est fixée à une tige de rasette (142) qui est disposée de façon à pouvoir se déplacer dans une direction longitudinale de la tige de rasette (142),
la première rasette (141) et la seconde rasette (141a) sont interconnectées avec un mécanisme de synchronisation (144) disposé pour permettre un déplacement égal des rasettes (141, 141a) par rapport aux corps de charrue respectifs (11),
la première rasette (141) et la seconde rasette (141a) sont en outre interconnectées avec un actionneur linéaire (15) disposé pour déplacer les rasettes (141, 141a) dans la direction longitudinale des tiges de rasette (142),
une unité de commande (16) est disposée pour une commande à distance du déplacement de la première et seconde rasette (141, 141a),
une roue de profondeur (13) est pourvue d'un actionneur de réglage de profondeur (131),
et l'unité de commande (16) est agencée pour permettre un changement d'une position verticale des rasettes (141, 141a) corrélé à un changement de position verticale de la roue de profondeur (13), **caractérisé en ce que** le procédé inclut les étapes de:
a) régler la profondeur de travail de la charrue (1) en changeant la position verticale de la roue de profondeur (13);
b) régler la profondeur de travail de la première et seconde rasette (141, 141a) des agencements de rasette (14);
c) régler l'unité de commande (16) pour permettre le changement de la position verticale de la roue de profondeur (13) afin de fournir un changement corrélé de la position verticale des rasettes (141, 141a);
d) faire fonctionner la charrue (1) en incluant un changement de la profondeur de travail de la charrue (1), ainsi déplaçant simultanément les première et seconde rasettes (141, 141a) de manière corrélative.

11. Le procédé selon la revendication 10, dans lequel le procédé comprend en outre l'étape de:
b1) régler la profondeur de travail des première et seconde rasettes (141, 141a) de chacun des agencements de rasette (14) individuellement.

12. Le procédé selon la revendication 10, dans lequel le procédé comprend en outre l'étape de:
b1) régler la profondeur de travail des première et seconde rasettes (141, 141a) de chacun des agencements de rasette (14) collectivement.
